**Europäisches Patentamt**

**European Patent Office**

**Office européen des brevets**

(19)

(11) Veröffentlichungsnummer: **0 048 708**
**A1**

# (12) EUROPÄISCHE PATENTANMELDUNG

(21) Anmeldenummer: **81890154.8**

(22) Anmeldetag: **23.09.81**

(51) Int. Cl.³: **F 24 J 3/02**

(30) Priorität: **23.09.80 AT 4749/80**

(43) Veröffentlichungstag der Anmeldung:
**31.03.82 Patentblatt 82/13**

(84) Benannte Vertragsstaaten:
**BE CH DE FR GB IT LI LU NL SE**

(71) Anmelder: **Freller, Walter**
**Wallernstrasse 20**
**A-4522 Sierning(AT)**

(72) Erfinder: **Freller, Walter**
**Wallernstrasse 20**
**A-4522 Sierning(AT)**

(54) **Energiedachziegel.**

(57) Ein rahmenloses Dachelement, das über die ganze Dachfläche zur Dacheindeckung dient und zur Sonnenenergiegewinnung verwendent wird, weist über seine ganze Oberfläche eine Wärmeträgerschicht (1) auf, die mit einer transparenten Abdeckung (2) in einem Abstand über und verschoben nach unten zur Wärmeträgerableitung abgedeckt ist und mit der Wärmeträgerschicht verbunden ist. Die Strahlungswärme wird von der Wärmeträgerschicht aufgenommen und wird an ein berührendes Wärmeträgermedium abgegeben, das die Wärmeenergie abführt.

EP 0 048 708 A1

1

ENERGIEDACHZIEGEL

Herkömmliche Energiedächer, die auch zugleich eine dichte Abdeckung des Daches, also Witterungseinflüsse abweisen
können, werden zum Teil erreicht durch dichtes Aneinanderreihen von herkömmlichen Sonnenkollektorensystemen, die
mit Rohrleitungen oder Druckschläuchen verbunden sind.
Diese erfordern eine aufwendige Dachabdeckung mit sorgfältiger Verrohrung, in der das Wärmeträgermedium von Kollektoreinheit zu Kollektoreinheit durchgepumpt wird oder
zirkuliert. Wie zu erkennen ist, ist für die Montage äusserstes Fachwissen notwendig.

Einer der Vorteile der Erfindung besteht u.a. darin, daß
der Dachdecker ein vom System her ähnliches Element oder
Dachziegel in bis jetzt bekannter Weise für die Abdeckung
eines Daches verarbeiten kann. Die Aufgabe des Installateurs
wird auf die Zuleitung und Abführung des Wärmeträgermediums
zu den Wärmeaustauschern, Speicher und Heizsystemen beschränkt.

Bei herkömmlichen Sonnenkollektorensystemen zur Dachabdeckung
wird das Wärmeträgermedium durchgepumpt oder es zirkuliert;
dagegen fließt erfindungsgemäß das Wärmeträgermedium von Energiedachziegel zu Energiedachziegel an der absolut glatten,
hochgleitfähigen und überlappenden Wärmeträgerableitung hauchdünn verteilt in Art eines Flüssigkeitsfilmes rasch ab. Die
darüberliegende, transparente, überlappende Abdeckung des abfließenden Wärmeträgermediums, die mit der gleitfähigen Wärmeträgerableitung verbunden ist, ergibt den in sich kompakten
Energiedachziegel.

2.

Die Abdeckung ist im Bereich der Abflußebene der Wärmeträgerableitung in einem genügend großen Abstand befestigt, so daß keine Berührung des Wärmeträgermediums mit der transparenten Abdeckung der Wärmeträgerableitung erfolgen kann. Dadurch entsteht in der gesamten Dachabdeckung im Inneren der Energiedachziegel ein druckloser Luftraum.

Wird eine bestimmte Viskosität des Wärmeträgermediums zur Abführung der Wärmeenergie eingesetzt, in Abhängigkeit zur Dachneigung und zur Dachlänge, erreicht man bezogen auf das gesamte Energiedach, gegenüber herkömmlichen Systemen, eine optimal angepaßte, wesentlich kürzere Verweildauer des Wärmeträgermediums zur Wärmeaufnahme. Somit ergibt sich eine Erhöhung des Wirkungsgrades der Gesamtanlage.

Das drucklose Energiedachziegel-System ermöglicht einen gefahrloseren Betrieb. Außerdem ergeben sich durch die bewegliche, elastische Energiedachabdeckung Materialeinsparungen.

Das Wärmeträgermedium wird bei nicht wärmeabsorbierender Wärmeträgerschicht in bekannter Weise dunkel eingefärbt sein, um Wärme aufzunehmen.

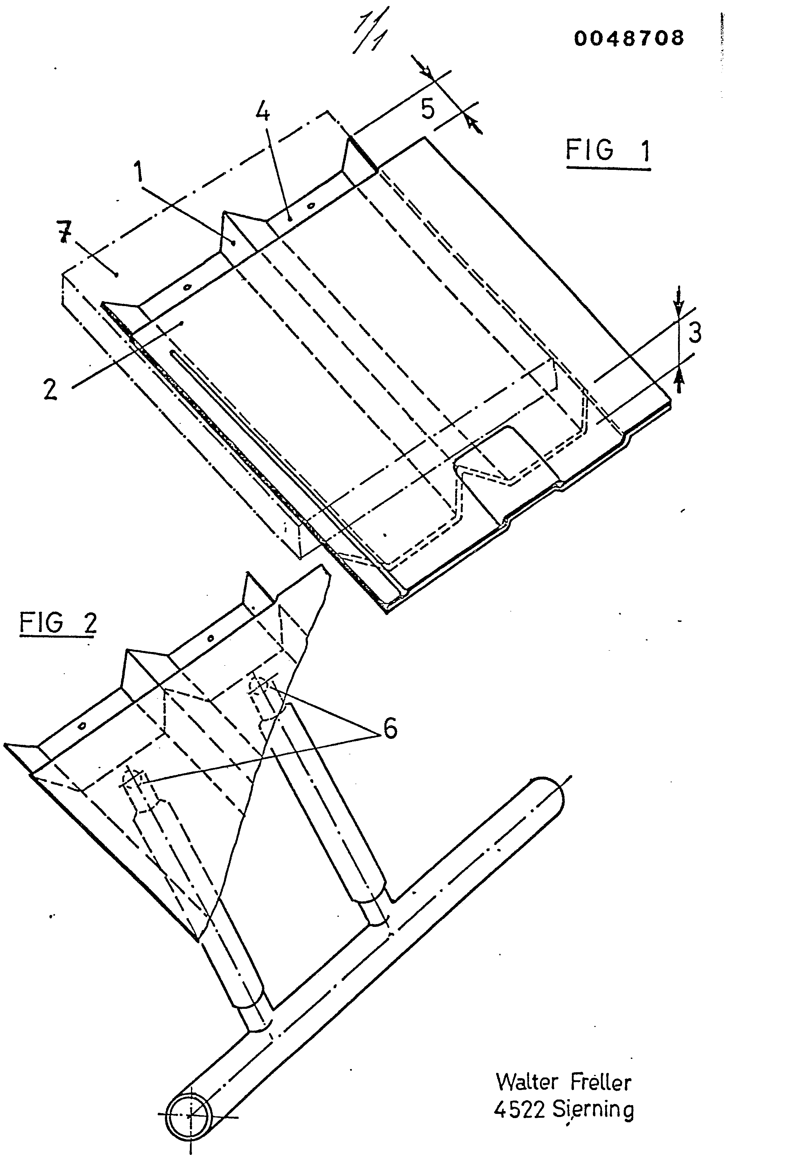

In der Zeichnung ist eine beispielsweise Ausführungsform des Erfindungsgegenstandes dargestellt. Die Fig. 1 zeigt in der Schrägansicht einen Energiedachziegel und in Fig. 2 in Schrägansicht eine Zuleitungsmöglichkeit, die in ähnlicher Form auch als Ableitung des Wärmeträgermediums vom Dach dient.

Mit 1 ist die gleitfähige Wärmeträgerschicht bezeichnet, auf der die transparente Abdeckung 2 in einem Abstand 3 zur Wärmeträgerableitung 4, und nach unten versetzt in einem Abstand

3

kraftschlüssig mit der Wärmeträgerschicht verbunden ist.

Diese transparente Abdeckung 2 ist in der Zeichnung in ebener Form dargestellt.

Sind Abdeckung und Wärmeträgerschicht aus verschiedenem Material, ist es zweckmäßig die Abdeckung in gewellter Form auszubilden, um die verschiedene Wärmeausdehnung der Materialien aufzunehmen.

Die mit 7 bezeichnete Isolation des Ziegels ist versetzt am Energiedachziegel unterhalb der Wärmeträgerableitung 4 befestigt.

Die in Fig. 2 mit 6 dargestellte Zu- oder Ableitung des Wärmeträgermediums läßt sich auch durch abgedeckte Rinnen oder Ähnlichem an First und Trapf lösen.

Patentansprüche

1. Energiedachziegel mit einer Wärmeträgerschicht     und einer Abdeckung     dadurch gekennzeichnet, daß die Oberfläche der Wärmeträgerschicht (1) absolut glatt und hochgleitfähig ausgeführt ist und zur hauchdünnen Ableitung des Wärmeträgermediums in Art eines Flüssigkeitsfilmes an der Oberfläche der Wärmeträgerableitung (4) dient, ohne die darüberliegende transparente Abdeckung (2) zu berühren.

2. Energiedachziegel nach Anspruch 1, dadurch gekennzeichnet, daß zwischen der transparenten Abdeckung (2) und dem abfliessenden Wärmeträgermedium auf der Wärmeträgerableitung (4) ein atmosphärischer Luftzwischenraum besteht.

0048708

FIG 1

FIG 2

Walter Freller
4522 Sierning

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | DE - A - 2 753 742 (CHAFIK) <br> * Ganzes Dokument * <br><br> -- | 1,2 | F 24 J 3/02 |
| X | US - A - 4 153 037 (ISAACSON) <br> * Ganzes Dokument * <br><br> -- | 1,2 | |
| | CA - A - 1 074 199 (REYNOLDS) <br> * Ganzes Dokument * <br><br> -- | 1,2 | |
| A | US - A - 4 151 721 (KUMM) | | RECHERCHIERTE SACHGEBIETE (Int. Cl.³) |
| A | DE - A - 2 836 436 (SCHLESIER) <br><br> ----- | | F 24 J |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-12-1981 | SMETS |

EPA form 1503.1   06.78